# EUROPÄISCHE PATENTSCHRIFT

(11) **EP 4 450 235 B1**
(45) Veröffentlichungstag und Bekanntmachung des Hinweises auf die Patenterteilung: **29.10.2025**
(21) Anmeldenummer: 23168278.2
(22) Anmeldetag: 17.04.2023
(51) Int. Cl.: B25J 9/16

(54) **VERFAHREN ZUR ÜBERWACHUNG DES BETRIEBS EINES ROBOTERS**
METHOD FOR MONITORING THE OPERATION OF A ROBOT
PROCÉDÉ DE SURVEILLANCE DU FONCTIONNEMENT D'UN ROBOT

(43) Veröffentlichungstag der Anmeldung: 23.10.2024
(73) Patentinhaber: SICK AG, 79183 Waldkirch (DE)
(72) Erfinder: Hofmann, Christoph, 79183 Waldkirch (DE); Hammes, Markus, 79117 Freiburg (DE)
(74) Vertreter: Manitz Finsterwald Patent- und Rechtsanwaltspartnerschaft mbB

(56) Entgegenhaltungen:
- EP-A1- 4 052 866
- DE-A1- 102017 001 298
- DE-A1- 102018 213 194
- DE-A1- 102020 203 636

## Beschreibung

Die vorliegende Erfindung betrifft ein Verfahren zur Überwachung des Betriebs eines Roboters, insbesondere eines Gelenkarmroboters mit beispielsweise sechs Achsen.

Derartige Roboter werden häufig in industriellen Prozessen eingesetzt, um beispielsweise Montage-, Schweiß- und andere Arbeiten an Werkstücken durchzuführen. Aufgrund der Bewegungen des Roboters geht vom Roboter eine gewisse Gefahr aus, welcher üblicherweise durch Zugangsbeschränkungen oder durch eine Sensorüberwachung von Bereichen in der Nähe des Roboters begegnet wird.

Hierbei wird das von den Sensoren überwachte Schutzfeld häufig relativ weit entfernt vom Roboter aufgespannt, so dass eine Verletzung des Schutzfelds durch den Roboter vermieden wird. Wird eine Verletzung des Schutzfelds erkannt, beispielsweise durch das Eindringen einer Person oder auch nur eines Körperteils einer Person in das Schutzfeld, so wird üblicherweise der Roboter gestoppt, was zu unerwünschten Produktionsausfällen führt. Nachteilig an dem entfernt zum Roboter aufgespannten Schutzfeld ist, dass unnötig Raum für das Schutzfeld benötigt wird.

Die EP 4 052 866 A1 offenbart ein Verfahren für einen Roboter, bei welchem für den Roboter und für sich in der Nähe des Roboters befindliche Menschen jeweils ein Bereich um den Roboter und den Menschen definiert wird. Kommen sich die Bereiche zu nahe, kann der Roboter gestoppt oder verlangsamt werden.

Die DE 10 2017 001 298 A1 betrifft eine Robotersimulation, bei welcher ein vom Roboter überstrichener Raum ermittelt wird. Dabei wird auch ein Bremsweg des Roboters aufgrund der Trägheit bestimmt und dem überstrichenen Raum hinzugefügt.

Es ist eine der Erfindung zugrundeliegende Aufgabe, ein verbessertes Verfahren zur Absicherung eines Roboters anzugeben, wodurch letztendlich eine verbesserte Überwachung des Betriebs eines Roboters ermöglicht wird.

Diese Aufgabe wird durch ein Verfahren gemäß Anspruch 1 gelöst.

Das erfindungsgemäße Verfahren dient der Überwachung des Betriebs eines Roboters, insbesondere eines Gelenkarmroboters mit beispielsweise sechs Achsen, wobei der Roboter (zumindest initial und/oder zeitweise) in einem Schutzfeld betrieben wird. Das Schutzfeld weist eine äußere Begrenzung auf. Bei dem Verfahren
- wird für, insbesondere mehrere, verschiedene Roboterpositionen (z.B. während der Bewegung des Roboters) jeweils ein durch den Roboter eingenommener Raum ermittelt,
- wird der vom Roboter in der jeweiligen Roboterposition eingenommene Raum aus dem Schutzfeld entfernt, wobei durch das Entfernen des eingenommenen Raums eine innere Begrenzung des Schutzfelds geschaffen und/oder verändert (z.B. erweitert) wird.

Die Erfindung setzt auf der Erkenntnis auf, dass passgenau an die Bewegungen des Roboters angepasste Schutzfelder manuell nur sehr schwierig zu definieren und in entsprechende Software einzugeben sind. Dies gilt insbesondere für Gelenkarmroboter mit einer Vielzahl von Achsen, welche komplexe Posen einnehmen können.

Erfindungsgemäß wird daher während einer (realen und/oder simulierten) Bewegung des Roboters an verschiedenen Roboterpositionen der durch den Roboter eingenommene Raum ermittelt. Der eingenommene Raum kann beispielsweise über die zum jeweiligen Zeitpunkt bestehende Außenkontur des Roboters ermittelt werden. Der eingenommene Raum kann auch approximiert werden, sodass nicht jede Ecke und Kante des Roboters in der momentanen Roboterposition bei dem Entfernen des eingenommenen Raums berücksichtigt werden muss.

Es versteht sich dabei, dass unter dem eingenommenen Raum nicht das Volumen zu verstehen ist, sondern die Raumbereiche, in welchen sich der Roboter zu dem jeweiligen Zeitpunkt befindet. Der vom Roboter eingenommene Raum (d.h. der Raumbereich) wird dann aus dem Schutzfeld entfernt, so dass sich eine innere Begrenzung des Schutzfelds ergibt. Durch das Entfernen des eingenommenen Raums aus dem Schutzfeld ergibt sich ein Ausschnitt im Schutzfeld, der innerhalb der äußeren Begrenzung des Schutzfelds liegt. Es wird also genau derjenige Raumbereich aus dem Schutzfeld ausgeschnitten, in dem sich der Roboter in der jeweiligen Roboterposition gerade befindet. Dies ist sowohl bei zweidimensionalen als auch bei dreidimensionalen Schutzfeldern möglich.

Weiterhin versteht sich, dass zum Roboter auch ein vom Roboter bewegter Endeffektor (z.B. ein Werkzeug oder ein Greifer) und/oder ein vom Roboter bewegtes oder geladenes Werkstück gehören können, also insbesondere sämtliche sich mit dem Roboter mitbewegenden Teile. Dementsprechend können auch der vom Endeffektor und/oder vom Werkstück eingenommene Raum zu dem vom Roboter eingenommenen Raum gehören.

Das tatsächlich überwachte Schutzfeld ist dann das (neue bzw. verbleibende) Schutzfeld nach dem Entfernen des eingenommenen Raums und der Schaffung der inneren Begrenzung. Das Schutzfeld erstreckt sich also zwischen der inneren Begrenzung und der äußeren Begrenzung, insbesondere in verschiedene Raumrichtungen.

Bildlich gesprochen kann bei einem dreidimensionalen Schutzfeld eine Art Blase im Inneren des Schutzfelds vorhanden sein, welche den entfernten Bereich des Schutzfelds darstellt.

Das so erzeugte (neue) Schutzfeld kann dann im Betrieb des Roboters verwendet werden.

Dadurch, dass für verschiedene Roboterpositionen die innere Begrenzung angepasst und auf diese Weise das Schutzfeld für den Roboter "ausgehöhlt" wird, wird ein Raum geschaffen, welcher für den Roboter "reserviert" ist. Innerhalb der inneren Begrenzung existiert das Schutzfeld nicht, so dass der Roboter bei regulärem Betrieb keine Schutzfeldverletzung auslöst.

Genauer gesagt wird also der eingenommene Raum des Roboters ermittelt und dann alle Bereiche aus dem Schutzfeld entfernt, die sowohl zum Schutzfeld als auch zum Robotervolumen (d.h. zum vom Roboter eingenommenen Raum) gehören. Das Schutzfeld wird also virtuell von innen ausgeschnitten, was beispielsweise durch sogenannte "Cutout-Shapes" erfolgen kann, welche in einer Konfigurationssoftware definiert werden können. Bei dem Roboter kann es sich insbesondere um einen fest am Boden verankerten Roboter handeln. Die äußere Begrenzung des Schutzfelds kann vorbestimmt oder vorgegeben sein, beispielsweise durch die Größe und/oder Form des Raums, in dem der Roboter seine Bewegungen ausführt. Die äußere Begrenzung des Schutzfelds kann unveränderlich sein. Alternativ kann die äußere Begrenzung aber auch (z.B. an die innere Begrenzung) angepasst werden, wie später noch ausgeführt.

Insbesondere wird das Entfernen des eingenommenen Raums aus dem Schutzfeld für die jeweilige Roboterposition nur einmalig durchgeführt. Auf diese Weise können für vorbestimmte Bewegungsabläufe dann sämtliche verschiedenen Roboterpositionen einmalig ermittelt und der jeweils eingenommene Raum aus dem Schutzfeld entfernt werden, so dass das entstehende Schutzfeld dann im Betrieb verwendet werden kann.

Das Entfernen des eingenommenen Raums aus dem Schutzfeld kann insbesondere in einer Einlernphase erfolgen, in welcher der Roboter mit verminderter Geschwindigkeit bewegt wird und/oder in den verschiedenen Roboterpositionen jeweils stoppt. Nachdem das Schutzfeld final ermittelt wurde, kann der Roboter in eine Betriebsphase übergehen, in welcher der Roboter mit normaler Geschwindigkeit seine Arbeitsabläufe abarbeitet.

Erfindungsgemäß ist von Vorteil, dass dank des im Vorhinein (in der Einlernphase) ermittelten Schutzfeldes während der Betriebsphase des Roboters keine oder nur wenige Veränderungen des Schutzfelds erforderlich sind, wodurch die Überwachung des Betriebs des Roboters wenig rechenintensiv ist, damit wenig Abwärme produziert und eine geringere Rechenleistung erfordert.

Überdies wird es erfindungsgemäß ermöglicht, passgenaue und in ihrer Form auch sehr komplexe Schutzfelder zu schaffen, was manuell nicht oder nur mit sehr großem Aufwand möglich wäre.

Aufgrund des an die Roboterpositionen angepassten Schutzfelds ist es schließlich auch möglich, Fehler in der Bewegung des Roboters zu erkennen, wenn beispielsweise der Roboter fälschlicherweise sich in das Schutzfeld hineinbewegt. Es kann also erkannt werden, wenn der Roboter das Schutzfeld von innen verletzt. Insbesondere kann bei einer Schutzfeldverletzung eine sicherheitsgerichtete Maßnahme durchgeführt werden, beispielsweise ein Verlangsamen oder Stoppen des Roboters. Auf diese Weise können die Roboterkoordinaten "sicher" gemacht werden, wodurch die Sicherheit beim Betrieb des Roboters erhöht wird.

Es ist zu verstehen, dass es sich bei dem Schutzfeld um ein zweidimensionales oder auch dreidimensionales Schutzfeld handeln kann.

Die Aussage, dass der Roboter "in dem Schutzfeld" betrieben wird, ist insbesondere derart zu verstehen, dass die äußere Begrenzung des Schutzfelds den Roboter zumindest bereichsweise umgibt und/oder durch das Schutzfeld eine Absicherung des Roboters erfolgt. Durch das Entfernen des vom Roboter eingenommenen Raums bewegt sich der Roboter nur in der Einlernphase tatsächlich im Schutzfeld. Nach der Einlernphase bewegt sich der Roboter nicht mehr direkt im Schutzfeld, sondern ist vom Schutzfeld zumindest bereichsweise umgeben.

Wie angedeutet, kann es sich bei dem Roboter um einen Gelenkarmroboter, beispielsweise einen Fünf-, Sechs- oder Sieben-Achs-Knickarmroboter handeln. Ein SCARA-Roboter, ein Delta-Roboter oder ein Hexapod-Roboter sowie andere Arten von Robotern sind ebenfalls möglich.

Weitere Ausführungsformen der Erfindung sind der Beschreibung, den Zeichnungen sowie den Unteransprüchen zu entnehmen.

Gemäß einer ersten Ausführungsform bewegt sich der Roboter zumindest zum Teil innerhalb der äußeren Begrenzung des Schutzfelds. Die Bewegung kann dabei in der Realität erfolgen oder auch virtuell sein, beispielsweise in einer Simulation, wie später ausgeführt. Bevorzugt befindet sich der Roboter komplett innerhalb der äußeren Begrenzungen des Schutzfelds. Die äußeren Begrenzungen können beispielsweise die Form eines Quaders aufweisen.

Gemäß einer weiteren Ausführungsform wird jeweils nach Ablauf einer vorbestimmten Zeit und/oder jeweils nach einer Veränderung der Roboterposition um eine vorbestimmte Größe, der vom Roboter eingenommene Raum (neu) ermittelt. Die Roboterposition, d.h. beispielsweise die Roboterpose, also die Kombination aus Position und Orientierung der Komponenten des Roboters, kann dementsprechend periodisch und/oder wiederholt bestimmt werden. Die Bestimmung kann beispielsweise mehrmals pro Sekunde, aber auch z.B. alle 1, 2, 3 oder 4 Sekunden erfolgen. Alternativ oder zusätzlich kann eine Neubestimmung der Roboterposition und/oder die damit verbundene Ermittlung des vom Roboter eingenommenen Raums immer dann erfolgen, wenn sich der Roboter, und damit insbesondere zumindest eine seiner Komponenten, um eine vorbestimmte Größe bewegt hat. Bei der vorbestimmten Größe kann es sich beispielsweise um eine Wegstrecke und/oder einen Winkel der Bewegung handeln. Die Wegstrecke kann beispielsweise 1, 2, 5 oder 10 cm betragen. Bei dem Winkel kann es sich z.B. um einen Gelenkwinkel eines Gelenks des Roboters handeln. Die vorbestimmte Größe des Winkels kann z.B. 1°, 2° oder 5° betragen. Bei kinematisch redundanten Robotern kann z.B. ein Raumpunkt des Endeffektors (sog. TCP - Tool Center Point) gleichbleiben, wobei sich aber durch neue Gelenkpositionen ein anderer durch den Roboter eingenommener Raum ergeben kann. Nach der neuen Ermittlung wird der dann eingenommene Raum aus dem Schutzfeld entfernt, d.h. vom Schutzfeld subtrahiert. Der Raumbereich, welchen das Schutzfeld dann einnimmt, wird somit verkleinert.

Gemäß einer weiteren Ausführungsform wird der zwischen zwei verschiedenen Roboterpositionen von dem Roboter eingenommene Raum extrapoliert und ebenfalls aus dem Schutzfeld entfernt. Es kann also eine Extrapolation zwischen den aus dem Schutzfeld entfernten Bereichen erfolgen, beispielsweise eine lineare oder eine polynomiale Interpolation. Auf diese Weise kann eine kontinuierliche innere Begrenzung des Schutzfelds geschaffen werden.

Gemäß einer weiteren Ausführungsform wird das Schutzfeld durch eine Sensorik überwacht, welche zumindest einen Sensor umfasst, welcher bevorzugt separat und/oder beabstandet zu dem Roboter angeordnet ist. Durch die Sensorik kann eine Verletzung des Schutzfelds erkannt werden. Die Sensorik kann einen oder mehrere Laserscanner, 3D-Kameras und dergleichen umfassen, um das Eindringen oder Vorhandensein von Objekten im Schutzfeld zu detektieren. Bevorzugt kann die Sensorik mehrere 3D-Kameras umfassen, welche an verschiedenen Positionen und/oder mit verschiedener Ausrichtung angebracht sind, so dass das Schutzfeld aus mehreren Richtungen überwacht wird. Auf diese Weise kann das Schutzfeld vollständig von den Sensoren erfasst werden, so dass keine blinden Bereiche im Schutzfeld vorhanden sind.

Gemäß einer weiteren Ausführungsform wird der von dem Roboter eingenommene Raum zumindest zum Teil mittels der Sensorik bestimmt, insbesondere durch Mehrfachmessung in derselben Roboterposition. Da die Sensorik ohnehin ausgebildet ist, Objekte innerhalb der äußeren Begrenzung des Schutzfelds zu erkennen, kann dementsprechend auch der Roboter durch die Sensorik erfasst und dessen momentane Position und der vom Roboter eingenommene Raum mittels der Sensorik bestimmt (z.B. gemessen) werden. Durch eine Mehrfachmessung kann die tatsächliche Roboterposition und damit der tatsächlich eingenommene Raum noch genauer bestimmt werden. Hierzu können mehrere Messwerte jeweils durch Mittelwertbildung oder ein anderes geeignetes Verfahren miteinander verrechnet werden.

Gemäß einer weiteren Ausführungsform wird der von dem Roboter eingenommene Raum zumindest zum Teil mittels Simulation ermittelt, beispielsweise durch Schätzung, insbesondere mittels eines Kalmanfilters. Die Ermittlung durch Simulation kann alternativ oder zusätzlich zu der Erfassung durch die Sensorik erfolgen. Die Simulation kann beispielsweise basierend auf CAD-Daten und/oder Bahnplanungsdaten, beispielsweise aus einer Motion-Software, erfolgen. Beispielsweise können Daten aus Programmen wie ROS (Robot Operating System), insbesondere MoveIT, oder roboDK und ähnliches verwendet werden. Auf diese Weise muss der Roboter während der Einlernphase nicht zwangsläufig reale Bewegungen vollführen. Stattdessen kann die Anpassung des Schutzfelds rein virtuell erfolgen.

Es ist zudem denkbar, dass bei der Simulation auch unbekannte Roboterposen zu einer Anpassung des Schutzfelds führen. Hierzu können beispielsweise ausgehend von einer bekannten Start-Roboterposition mittels eines Kalmanfilters mögliche zukünftige Roboterpositionen geschätzt werden. Das Schätzen mittels des Kalmanfilters kann dabei sowohl im kartesischen Raum als auch im Gelenkwinkelraum erfolgen.

Gemäß einer weiteren Ausführungsform wird der vom Roboter eingenommene Raum nach dessen Ermittlung vergrößert, beispielsweise durch eine Streckung, insbesondere durch eine isotrope Streckung. Der vergrößerte Raum kann dann aus dem Schutzfeld entfernt werden, sodass der vergrößerte Raum dann zumindest bereichsweise die innere Begrenzung des Schutzfelds darstellt. Auf diese Weise kann eine Pufferzone um den Roboter geschaffen werden, so dass Messfehler oder eine geringe Abweichung der Roboterposition im Betrieb nicht zu einer Schutzfeldverletzung führen. Beispielsweise kann die isotrope Streckung in diesem Fall den vom Roboter eingenommenen Raum um 1, 2, 5 oder 10% vergrößern.

Alternativ kann der vergrößerte Raum als neue äußere Begrenzung des Schutzfelds verwendet werden. In diesem Fall bildet der vom Roboter eingenommene Raum bevorzugt die innere Begrenzung des Schutzfelds und/oder der vergrößerte Raum die äußere Begrenzung des Schutzfelds. Auf diese Weise kann eine Art "Schlauch" um den Roboter herum erzeugt werden, mithin also ein an den Roboter und seine Bewegungen angepasstes Schutzfeld. Wenn der vergrößerte Raum als äußere Begrenzung dienen soll, dann kann eine Vergrößerung des eingenommenen Raums um beispielsweise 50, 100, 150 oder 200% erfolgen.

Auf diese Weise lässt sich für eine Vielzahl von Roboterpositionen die äußere Begrenzung derart festlegen, dass z.B. ein Mensch lediglich einen geringen Abstand zu den Roboterpositionen einhalten muss. Somit kann eine verbesserte Mensch-Maschine-Kooperation erzielt werden.

Die Vergrößerung des vom Roboter eingenommenen Raums kann (für beide Varianten) auch unterschiedlich ausfallen. Beispielsweise kann die Vergrößerung abhängig von der Robotergeschwindigkeit an einer bestimmten Roboterposition vorgenommen werden. So können beispielsweise bei hoher Robotergeschwindigkeit größere Pufferzonen um den Roboter geschaffen werden.

Gemäß einer weiteren Ausführungsform weist die innere und/oder die äußere Begrenzung des Schutzfelds eine unregelmäßige Form auf. Die innere und/oder die äußere Begrenzung des Schutzfelds ist insbesondere durch extrudierte Polygone und/oder gleichgeformte Dreiecke und/oder andere Polygone definiert. Die Kontur des von dem Roboter eingenommenen Raums kann für dreidimensionale Schutzfelder approximiert werden, insbesondere durch die genannten extrudierten Polygone und/oder gleichgeformte Dreiecke und/oder andere Polygone. Unregelmäßig bedeutet insbesondere, dass die Form z.B. nicht symmetrisch oder rotationssymmetrisch ist und nicht nur beispielsweise durch einen Zylinder und/oder einen Quader gebildet ist.

Gemäß einer weiteren Ausführungsform werden durch das Entfernen des vom Roboter eingenommenen Raums aus dem Schutzfeld in verschiedenen Roboterpositionen verschiedene Schutzfelder geschaffen, zwischen welchen im Betrieb des Roboters umgeschaltet wird. Beispielsweise kann also für eine erste Roboterposition ein erstes Schutzfeld geschaffen werden, indem der vom Roboter in der ersten Roboterposition eingenommene Raum aus dem Schutzfeld entfernt wird. Für eine zweite Roboterposition kann auf dieselbe Weise ein zweites Schutzfeld erzeugt werden. Für weitere Schutzfelder und Roboterpositionen kann entsprechend verfahren werden. Ebenfalls ist es möglich, mehrere, insbesondere nebeneinander liegende, Roboterpositionen für dasselbe Schutzfeld heranzuziehen. Zwischen den einzelnen Schutzfeldern erfolgt also eine Veränderung der inneren Begrenzung des Schutzfelds, wie auch bereits im Anspruch 1 erwähnt. In der Betriebsphasen kann dann jeweils zwischen den für eine jeweilige Roboterposition ermittelten Schutzfeldern gewechselt werden, so dass immer ein optimales Schutzfeld für die momentane Roboterposition verwendet wird. Hierbei ergibt sich dann der Vorteil, dass die Roboterposition noch genauer mit Hilfe des Schutzfeldes überprüft werden kann. Hinkt der Roboter beispielsweise durch eine Verzögerung in seiner Bewegung hinterher, so wird schon auf ein Schutzfeld umgeschaltet, welches noch nicht passend für die verzögerte Bewegung ist. Der Roboter verletzt dann das Schutzfeld, wodurch die Verzögerung erkannt werden kann.

Gemäß einer weiteren Ausführungsform erfolgt das Umschalten zwischen den verschiedenen Schutzfeldern basierend auf Informationen von einer Robotersteuerung. Die Informationen der Robotersteuerung können angeben, in welcher Roboterposition sich der Roboter eigentlich befinden müsste. Dadurch erfolgt das Umschalten insbesondere jeweils angepasst an die momentan gewünschte Bewegungsgeschwindigkeit des Roboters. Das Umschalten zwischen den verschiedenen Schutzfeldern kann dann anhand dieser Daten erfolgen, wodurch - wie oben ausgeführt - z.B. ein Hinterherhinken oder eine anderweitig falsche Bewegung des Roboters erkannt werden kann.

Durch die Umschaltung zwischen verschiedenen Schutzfeldern kann auch eine Art sich mitbewegender Begrenzung, d.h. eine sich mit dem Roboter mitbewegende "Bounding Box" erzeugt werden. Die Bounding Box kann mit einer Pufferzone beaufschlagt sein.

Gemäß einer weiteren Ausführungsform erfolgen das Ermitteln des vom Roboter eingenommenen Raums und das Entfernen des eingenommenen Raums aus dem Schutzfeld automatisch. Insbesondere können alle hierin genannten Verfahrensschritte automatisch erfolgen, d.h. es ist kein Zutun eines Benutzers notwendig. Erfindungsgemäß wird bei einer Verletzung des Schutzfelds durch den Roboter (d.h. von "innen") und/oder durch ein anderes Objekt von außen ein Signal ausgegeben, welches bevorzugt zu einer sicherheitsgerichteten Maßnahme führt. Durch das Signal kann die Verletzung des Schutzfelds angezeigt werden, woraufhin der Roboter dann beispielsweise verlangsamt, stoppt oder sich um das im Schutzfeld aufgetauchte Objekt herumbewegt.

Weiterer Gegenstand der Erfindung ist ein Robotersystem mit einem Roboter, insbesondere einem Gelenkarmroboter wie beispielsweise sechs Achsen, einer Robotersteuerung und einer Überwachungseinrichtung, wobei die Überwachungseinrichtung ein Schutzfeld definiert, in welchem sich der Roboter bewegt, wobei das Schutzfeld eine äußere Begrenzung aufweist, wobei
- die Überwachungseinrichtung ausgebildet ist, für, insbesondere mehrere, verschiedene Roboterpositionen (während der Bewegung des Roboters) jeweils einen durch den Roboter eingenommenen Raum zu ermitteln,
- die Überwachungseinrichtung ferner ausgebildet ist, den vom Roboter in der jeweiligen Roboterposition eingenommenen Raum aus dem Schutzfeld zu entfernen, wobei durch das Entfernen des eingenommenen Raums eine innere Begrenzung des Schutzfelds geschaffen und/oder verändert wird.

Die Ausführungen für das erfindungsgemäße Verfahren gelten für das erfindungsgemäße Robotersystem entsprechend. Es versteht sich, dass die hierin genannten Verfahrensschritte von der Überwachungseinrichtung und/oder der Robotersteuerung durchgeführt und/oder koordiniert werden können. Die genannte Sensorik kann beispielsweise über eine Datenverbindung mit der Überwachungseinrichtung gekoppelt sein, so dass Messdaten der Sensorik der Überwachungseinrichtung vorliegen. Die Überwachungseinrichtung kann insbesondere sämtliche Veränderungen des Schutzfeldes, das Umschalten zwischen Schutzfeldern, die Simulation oder Erfassung der Roboterbewegungen durch die Sensorik sowie eine Kommunikation mit der Robotersteuerung durchführen. Die Robotersteuerung kann auf ein Signal der Überwachungseinrichtung hin eine sicherheitsgerichtete Maßnahme durchführen, wie oben ausgeführt. Die Robotersteuerung und die Überwachungseinrichtung können ebenfalls über eine Datenverbindung miteinander gekoppelt sein.

Weiterhin versteht es sich, dass sämtliche hierin genannten Merkmale miteinander kombinierbar sind, sofern nicht explizit etwas Gegenteiliges angegeben ist.

Nachfolgend wird die Erfindung rein beispielhaft unter Bezugnahme auf die Zeichnungen beschrieben. Es zeigen:
- Fig. 1: ein Robotersystem in schematischer Ansicht; und
- Fig. 2: einen Roboter an verschiedenen Roboterpositionen.

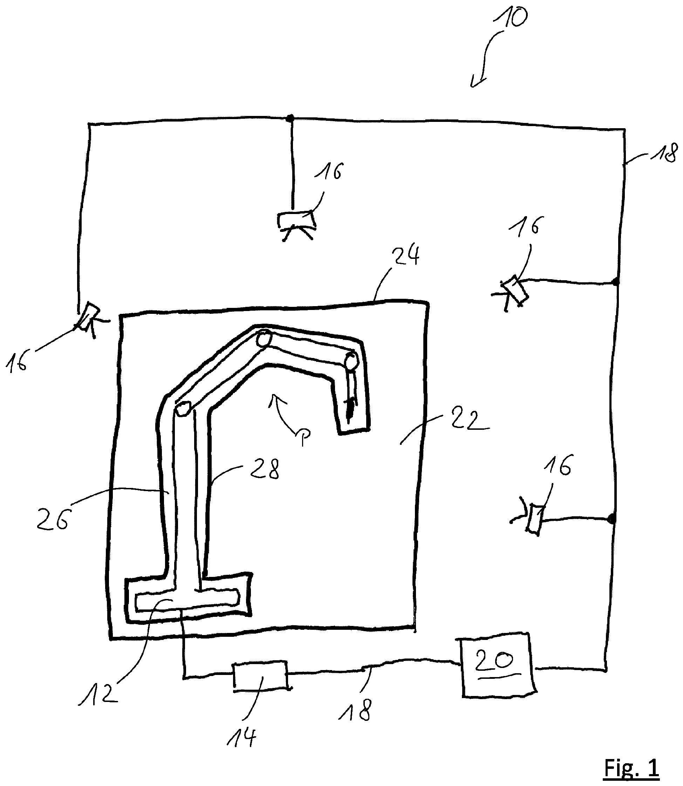

Fig. 1 zeigt ein Robotersystem 10 mit einem Roboter 12, welcher von einer Robotersteuerung 14 gesteuert wird. Der Roboter 12 wird von einer Vielzahl von Sensoren 16 überwacht, wobei die Sensoren als 3D-Kameras ausgebildet sind. Die Robotersteuerung 14 und die Sensoren 16 sind durch eine Ethernet-Datenverbindung 18 mit einer Überwachungseinrichtung 20 verbunden.

Der Roboter 12 umfasst mehrere Gelenke, so dass der Roboter 12 verschiedene Positionen P einnehmen kann.

Um den Roboter herum ist ein Schutzfeld 22 aufgespannt, welches eine quaderförmige äußere Begrenzung 24 aufweist. Das Schutzfeld 22 wird von der Überwachungseinheit 20 festgelegt und insbesondere den Sensoren 16 über die Ethernet-Datenverbindung 18 mitgeteilt.

Initial umfasst das Schutzfeld 22 den gesamten Raum innerhalb der äußeren Begrenzung 24. Nun wird über die Sensoren 16 mittels Mehrfachmessung die in Fig. 1 dargestellte Roboterposition P wiederholt ermittelt, wofür die Überwachungseinrichtung 20 die Messdaten der Sensoren 16 zusammenführt.

Die Überwachungseinrichtung ermittelt nun aus den Messdaten der Sensoren 16 den von dem Roboter 12 in der momentanen Roboterposition P eingenommenen Raum 26, vergrößert den eingenommen Raum 26 geringfügig und entfernt den eingenommenen Raum 26 aus dem Schutzfeld 22. Durch das Entfernen ergibt sich nun eine innere Begrenzung 28 des Schutzfelds 22.

Die innere Begrenzung 28 besitzt dementsprechend etwa die Form des Roboters 12 in seiner momentanen Pose.

Nachdem der vom Roboter 12 eingenommene Raum 26 nun für eine erste Roboterposition P aus dem Schutzfeld 22 entfernt wurde, erfolgt die Entfernung nachfolgend auch für weitere Roboterpositionen P, so dass der sich innerhalb der inneren Begrenzung 28 befindliche Raum vergrößert und damit an die Bewegungsabläufe des Roboters 12 angepasst wird.

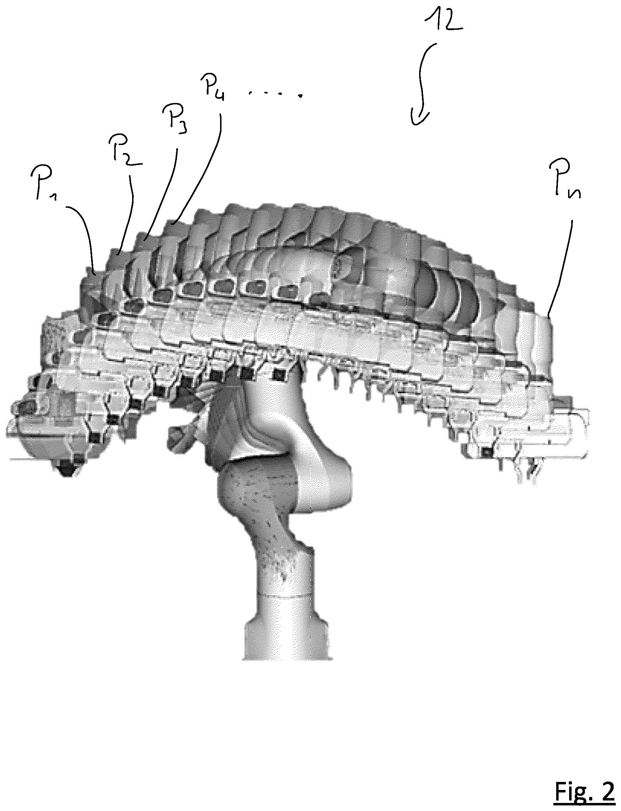

Verschiedenen Roboterpositionen P₁-Pₙ sind in Fig. 2 dargestellt, wobei für jede der dort dargestellten Roboterpositionen der eingenommene Raum 26 ermittelt und von der Überwachungseinrichtung 20 von dem Schutzfeld 22 abgezogen wird. Schließlich liegt in der Überwachungseinrichtung 20 das finale Schutzfeld vor, welches dann im Betrieb des Roboters 12 verwendet wird. Alternativ kann die Überwachungseinrichtung 20 auch zwischen verschiedenen Schutzfeldern 22 im Betrieb umschalten.

Wird von der Überwachungseinrichtung 20 basierend auf den Daten der Sensoren 16 oder direkt von den Sensoren 16 eine Schutzfeldverletzung festgestellt, so übermittelt die Überwachungseinrichtung 20 ein Signal an die Robotersteuerung 14, um eine sicherheitsgerichtete Aktion des Roboters 12 zu bewirken.

Die Überwachungseinrichtung 20 ist ausgebildet, die Veränderung des Schutzfelds basierend auf dem jeweils ermittelten eingenommenen Raum 26 des Roboters 12 automatisch durchzuführen. Auf diese Weise kann ein geometrisch komplexes Schutzfeld 22 erzeugt werden, welches optimal an die jeweiligen Bewegungen des Roboters 12 angepasst ist.

### Bezugszeichenliste

- 10: Robotersystem
- 12: Roboter
- 14: Robotersteuerung
- 16: Sensor
- 18: Ethernet-Verbindung
- 20: Überwachungseinrichtung
- 22: Schutzfeld
- 24: äußere Begrenzung
- 26: eingenommener Raum
- 28: innere Begrenzung
- P, P₁-Pₙ: Roboterposition

## Patentansprüche

1. Verfahren zur Überwachung des Betriebs eines Roboters (12), insbesondere eines Gelenkarmroboters mit z.B. 6 Achsen, in einem Schutzfeld (22), wobei das Schutzfeld (22) eine äußere Begrenzung (24) aufweist,
wobei
für verschiedene Roboterpositionen (P) jeweils ein durch den Roboter (12) eingenommener Raum (26) ermittelt wird,
wobei der vom Roboter (12) in der jeweiligen Roboterposition (P) eingenommene Raum (26) aus dem Schutzfeld (22) entfernt wird, wobei durch das Entfernen des eingenommenen Raums (26) eine innere Begrenzung (28) des Schutzfelds (22) geschaffen und/oder verändert wird,
wobei das Schutzfeld (22) auf eine Verletzung durch den Roboter (12) und auf eine Verletzung durch ein anderes Objekt von außen überwacht wird, und
wobei bei einer Verletzung des Schutzfelds (22) ein Signal ausgegeben wird.

2. Verfahren nach Anspruch 1,
wobei sich der Roboter (12) zumindest zum Teil innerhalb der äußeren Begrenzung des Schutzfelds (22) bewegt.

3. Verfahren nach Anspruch 1 oder 2,
wobei jeweils nach Ablauf einer vorbestimmten Zeit und/oder jeweils nach einer Veränderung der Roboterposition (P) um eine vorbestimmte Größe, der vom Roboter (12) eingenommene Raum (26) ermittelt wird.

4. Verfahren nach einem der vorstehenden Ansprüche,
wobei der zwischen zwei verschiedenen Roboterpositionen (P) von dem Roboter (12) eingenommene Raum (26) extrapoliert und ebenfalls aus dem Schutzfeld (22) entfernt wird.

5. Verfahren nach einem der vorstehenden Ansprüche,
wobei das Schutzfeld (22) durch eine Sensorik überwacht wird, welche zumindest einen Sensor (16) umfasst, welcher bevorzugt separat und/oder beabstandet zu dem Roboter (12) angeordnet ist.

6. Verfahren nach Anspruch 5,
wobei der von dem Roboter (12) eingenommene Raum (26) zumindest zum Teil mittels der Sensorik bestimmt wird, insbesondere durch Mehrfachmessung in derselben Roboterposition (P).

7. Verfahren nach einem der vorstehenden Ansprüche,
wobei der von dem Roboter (12) eingenommene Raum (26) zumindest zum Teil mittels Simulation ermittelt wird, beispielsweise durch Schätzung, insbesondere mittels eines Kalman-Filters.

8. Verfahren nach einem der vorstehenden Ansprüche,
wobei der vom Roboter (12) eingenommene Raum (26) nach dessen Ermittlung vergrößert wird, beispielsweise durch eine Streckung, insbesondere eine isotrope Streckung,
wobei der vergrößerte Raum (26) aus dem Schutzfeld (22) entfernt wird oder
wobei der vergrößerte Raum (26) als neue äußere Begrenzung (24) des Schutzfelds (22) verwendet wird.

9. Verfahren nach einem der vorstehenden Ansprüche,
wobei die innere und/oder die äußere Begrenzung (24, 28) des Schutzfelds (22) eine unregelmäßige Form aufweist und insbesondere durch extrudierte Polygone und/oder gleich geformte Dreiecke und/oder andere Polygone definiert ist.

10. Verfahren nach einem der vorstehenden Ansprüche,
wobei durch das Entfernen des vom Roboter (12) eingenommenen Raums (26) aus dem Schutzfeld (22) in verschiedenen Roboterpositionen (P) verschiedene Schutzfelder (22) geschaffen werden, zwischen welchen im Betrieb des Roboters (12) umgeschaltet wird.

11. Verfahren nach Anspruch 10,
wobei das Umschalten basierend auf Informationen von einer Robotersteuerung (14) erfolgt.

12. Verfahren nach einem der vorstehenden Ansprüche,
wobei das Ermitteln des vom Roboter (12) eingenommenen Raums (26) und das Entfernen des eingenommenen Raums (26) aus dem Schutzfeld (22) automatisch erfolgen.

13. Verfahren nach einem der vorstehenden Ansprüche,
wobei das bei einer Verletzung des Schutzfelds (22) durch den Roboter (12) und/oder ein anderes Objekt ausgegebene Signal zu einer sicherheitsgerichteten Maßnahme führt.

14. Robotersystem (10) mit einem Roboter (12), insbesondere einem Gelenkarmroboter mit z.B. 6 Achsen, einer Robotersteuerung (14) und einer Überwachungseinrichtung (20), wobei die Überwachungseinrichtung (20) ein Schutzfeld (22) definiert, in welchem sich der Roboter (12) bewegt, wobei das Schutzfeld (22) eine äußere Begrenzung (24) aufweist, wobei die Überwachungseinrichtung (20) ausgebildet ist, für verschiedene Roboterpositionen (P) jeweils einen durch den Roboter (12) eingenommenen Raum (26) zu ermitteln,
wobei die Überwachungseinrichtung (20) ausgebildet ist, den vom Roboter (12) in der jeweiligen Roboterposition (P) eingenommene Raum (26) aus dem Schutzfeld (22) zu entfernen, wobei durch das Entfernen des eingenommenen Raums (26) eine innere Begrenzung (28) des Schutzfelds (22) geschaffen und/oder verändert wird,
wobei die Überwachungseinrichtung (20) ausgebildet ist, das Schutzfeld (22) auf eine Verletzung durch den Roboter (12) und auf eine Verletzung durch ein anderes Objekt von außen zu überwachen, und
wobei die Überwachungseinrichtung (20) ausgebildet ist, bei einer Verletzung des Schutzfelds (22) ein Signal auszugeben.

## Claims

1. A method for monitoring the operation of a robot (12), in particular an articulated arm robot having, for example, 6 axes, in a protective field (22), wherein the protective field (22) has an outer boundary (24),
wherein
a respective space (26) occupied by the robot (12) is determined for different robot positions (P),
wherein
the space (26) occupied by the robot (12) in the respective robot position (P) is removed from the protective field (22), wherein an inner boundary (28) of the protective field (22) is created and/or changed by removing the occupied space (26),
wherein the protective field (22) is monitored for a violation by the robot (12) and for a violation by another object from the outside, and
wherein a signal is output when the protective field (22) is violated.

2. A method according to claim 1,
wherein the robot (12) moves at least partly within the outer boundary of the protective field (22).

3. A method according to claim 1 or 2,
wherein the space (26) occupied by the robot (12) is determined in each case after a predetermined time has elapsed and/or in each case after a change in the robot position (P) by a predetermined value.

4. A method according to any one of the preceding claims,
wherein the space (26) occupied by the robot (12) between two different robot positions (P) is extrapolated and is also removed from the protective field (22).

5. A method according to any one of the preceding claims,
wherein the protective field (22) is monitored by a sensor system which comprises at least one sensor (16) that is preferably arranged separately and/or spaced apart from the robot (12).

6. A method according to claim 5,
wherein the space (26) occupied by the robot (12) is at least partly determined by means of the sensor system, in particular by multiple measurement in the same robot position (P).

7. A method according to any one of the preceding claims,
wherein the space (26) occupied by the robot (12) is at least partly determined by means of simulation, for example by estimation, in particular by means of a Kalman filter.

8. A method according to any one of the preceding claims,
wherein the space (26) occupied by the robot (12) is increased after it has been determined, for example by a stretching, in particular an isotropic stretching,
wherein the increased space (26) is removed from the protective field (22) or
wherein the increased space (26) is used as a new outer boundary (24) of the protective field (22).

9. A method according to any one of the preceding claims,
wherein the inner and/or the outer boundary (24, 28) of the protective field (22) has an irregular shape and is in particular defined by extruded polygons and/or triangles of the same shape and/or other polygons.

10. A method according to any one of the preceding claims,
wherein, by removing the space (26) occupied by the robot (12) from the protective field (22), different protective fields (22), between which a switching takes place during operation of the robot (12), are created in different robot positions (P).

11. A method according to claim 10,
wherein the switching takes place based on information from a robot control (14).

12. A method according to any one of the preceding claims,
wherein the determination of the space (26) occupied by the robot (12) and the removal of the occupied space (26) from the protective field (22) take place automatically.

13. A method according to any one of the preceding claims,
wherein the signal which is output when the protective field (22) is violated by the robot (12) and/or by another object leads to a safety-related measure.

14. A robot system (10) comprising a robot (12), in particular an articulated arm robot having, for example, 6 axes, a robot control (14) and a monitoring device (20), wherein the monitoring device (20) defines a protective field (22) in which the robot (12) moves, wherein the protective field (22) has an outer boundary (24), wherein
the monitoring device (20) is configured to determine a respective space (26) occupied by the robot (12) for different robot positions (P),
wherein
the monitoring device (20) is configured to remove the space (26) occupied by the robot (12) in the respective robot position (P) from the protective field (22), wherein an inner boundary (28) of the protective field (22) is created and/or changed by removing the occupied space (26),
wherein the monitoring device (20) is configured to monitor the protective field (22) for a violation by the robot (12) and for a violation by another object from the outside, and
wherein the monitoring device (20) is configured to output a signal when the protective field (22) is violated.

## Revendications

1. Procédé de surveillance du fonctionnement d'un robot (12), en particulier d'un robot à bras articulé comportant par exemple 6 axes, dans un champ de protection (22), le champ de protection (22) présentant une limite extérieure (24),
dans lequel
- un espace respectif (26) occupé par le robot (12) est déterminé pour différentes positions (P) du robot,
- l'espace (26), occupé par le robot (12) dans la position respective (P) du robot, est retiré du champ de protection (22), le retrait de l'espace occupé (26) créant et/ou modifiant une limite intérieure (28) du champ de protection (22),
le champ de protection (22) est surveillé afin de détecter toute violation par le robot (12) et toute violation de l'extérieur par un autre objet, et
un signal est émis en cas de violation du champ de protection (22).

2. Procédé selon la revendication 1,
dans lequel le robot (12) se déplace au moins en partie à l'intérieur de la limite extérieure du champ de protection (22).

3. Procédé selon la revendication 1 ou 2,
dans lequel l'espace (26) occupé par le robot (12) est déterminé à chaque fois après écoulement d'un temps prédéfini et/ou à chaque fois après une modification de la position (P) du robot d'une valeur prédéfinie.

4. Procédé selon l'une des revendications précédentes,
dans lequel l'espace (26) occupé par le robot (12) entre deux positions différentes (P) du robot est extrapolé et également retiré du champ de protection (22).

5. Procédé selon l'une des revendications précédentes,
dans lequel le champ de protection (22) est surveillé par un système capteur comprenant au moins un capteur (16) qui est de préférence disposé séparément et/ou à distance du robot (12).

6. Procédé selon la revendication 5,
dans lequel l'espace (26) occupé par le robot (12) est déterminé au moins en partie au moyen du système capteur, en particulier par des mesures multiples dans la même position (P) du robot.

7. Procédé selon l'une des revendications précédentes,
dans lequel l'espace (26) occupé par le robot (12) est déterminé au moins en partie au moyen d'une simulation, par exemple par estimation, en particulier au moyen d'un filtre de Kalman.

8. Procédé selon l'une des revendications précédentes,
dans lequel l'espace (26) occupé par le robot (12) est agrandi après sa détermination, par exemple par un étirement, en particulier par un étirement isotrope,
l'espace agrandi (26) est retiré du champ de protection (22), ou l'espace agrandi (26) est utilisé comme nouvelle limite extérieure (24) du champ de protection (22).

9. Procédé selon l'une des revendications précédentes,
dans lequel la limite intérieure et/ou extérieure (24, 28) du champ de protection (22) présente une forme irrégulière et est définie en particulier par des polygones extrudés et/ou par des triangles de forme identique et/ou par d'autres polygones.

10. Procédé selon l'une des revendications précédentes,
dans lequel, en retirant l'espace (26) occupé par le robot (12) du champ de protection (22), différents champs de protection (22) sont créés dans différentes positions (P) du robot tout en permettant de commuter entre eux pendant le fonctionnement du robot (12).

11. Procédé selon la revendication 10,
dans lequel la commutation s'effectue sur la base d'informations provenant d'une commande de robot (14).

12. Procédé selon l'une des revendications précédentes,
dans lequel la détermination de l'espace (26) occupé par le robot (12) et le retrait de l'espace occupé (26) du champ de protection (22) s'effectuent automatiquement.

13. Procédé selon l'une des revendications précédentes,
dans lequel le signal émis en cas de violation du champ de protection (22) par le robot (12) et/ou par un autre objet entraîne une mesure de sécurité.

14. Système robotique (10) comprenant un robot (12), en particulier un robot à bras articulé comportant par exemple 6 axes, une commande de robot (14) et un dispositif de surveillance (20), le dispositif de surveillance (20) définissant un champ de protection (22) dans lequel se déplace le robot (12), le champ de protection (22) présentant une limite extérieure (24),
dans lequel
- le dispositif de surveillance (20) est conçu pour déterminer, pour différentes positions (P) du robot, un espace respectif (26) occupé par le robot (12),
- le dispositif de surveillance (20) est conçu pour retirer l'espace (26), occupé par le robot (12) dans la position respective (P) du robot, du champ de protection (22), le retrait de l'espace occupé (26) créant et/ou modifiant une limite intérieure (28) du champ de protection (22),
le dispositif de surveillance (20) est conçu pour surveiller le champ de protection (22) afin de détecter toute violation par le robot (12) et toute violation de l'extérieur par un autre objet, et
le dispositif de surveillance (20) est conçu pour émettre un signal en cas de violation du champ de protection (22).
